# EUROPEAN PATENT APPLICATION

(11) **EP 1 695 781 A1**
(43) Date of publication of application: **30.08.2006**
(21) Application number: 06110365.1
(22) Date of filing: 23.02.2006
(51) Int. Cl.: B23B 51/04, B28D 1/04, E21B 10/48

(54) **Diamond core drill**

(30) Priority: 24.02.2005 GB 0503802
(71) Applicant: Marcrist International Limited, Doncaster DN3 1QR (GB)
(72) Inventor: Halbeisen, Mario, CH 6052, Hergiswill (CH)
(74) Representative: Loven, Keith James

(57) **Abstract**

A diamond core drill comprises a support tube (1) carrying a plurality of diamond-containing segments (5) spaced around an end (4) thereof, at least some of the segments (5) being shaped so as to present an apex (40,50,70,71,80) on the face of the segment (5) remote from the tube end (4), characterised in that the height of the apex along the longitudinal axis of the tube (1) varies over the length of the segment (5).

## Description

### Field of the Invention

This invention relates to a diamond core drill, for example for use in cutting larger diameter holes in masonry and other materials.

### Background to the Invention

A diamond core drill typically consists of a steel tube extending from one side of a base plate, the other side of which carries a shank or other mounting means for mounting the drill for rotation by an electric or other drill motor, for example a hand-held electric drill device. A plurality of cutting segments are mounted on the free end of the tube, spaced around it. The segments are usually formed of a sintered compressed metal powder body containing diamond grit, and have traditionally been shaped as rectangular blocks, with a slight radius incorporated to accommodate the curvature of the tube end to which they are attached, for example by welding or brazing. The composition of the metal powder used to provide the carrier body for the grit will depend on the type of material on which the drill is intended to be used. For example, drills for use on masonry tend to employ relatively soft metals such as copper or a bronze alloy as the carrier, while those for use on other materials may incorporate harder metals such as tungsten.

In some core drills, the segments have a pointed or "rooftop" edge which, when the drill is new, aids centring, and also avoids the need for dressing, i.e. pre-wearing the metal carrier body to expose the diamond grit. Generally, however, the segments are designed to perform a grinding, rather than cutting, action.

New composite materials, such as plastics and wood composite boards, as well as wood, are difficult to cut in a grinding motion, because the flat grinding face of the diamond segments clogs up and glazes, which causes excessive heat. The drill (particularly when used dry) then does not cut its way through the material, but actually burns through the material. These materials could be cut much more efficiently if the diamond segments were designed as cutting teeth rather than grinding blocks. The reason for the predominantly square design lies in the fact that if the segment had a tapered cutting shape that was not uniform, the performance characteristics such as cutting speed and life would alter significantly as more or less diamond volume would be in contact with the material being drilled. The fastest cutting occurs when only the sharp points of teeth are contacting the material. As the teeth wear down, the tooth surface area in contact with the material being cut increases, and the cutting segments then tend towards operating as grinding blocks again.

### Summary of the Invention

According to one aspect of the invention, there is provided a diamond core drill, comprising a support tube carrying a plurality of diamond-containing segments spaced around an end thereof, at least some of the segments being shaped so as to present an apex on the face of the segment remote from the tube end, characterised in that the height of the apex along the longitudinal axis of the tube varies over the length of the segment.

The height of the apex may vary linearly from a maximum at one end of the segment to a minimum at the opposite end thereof.

Alternatively, the height of the apex varies non-linearly along the length of the segment. For example, the height of the apex may be at a maximum at each end of the segment. The apex may also form a maximum or peak in between the ends of the segments, describing a convex curve in between adjacent maxima.

At least some of the segments preferably each have at least one aperture through from one side face to the opposite side face whereby, as the segments wear down to the level of the aperture, they become divided into at least two smaller segments.

Alternatively, at least some of the segments are at least partially tapered so as to have a greater length remote from the tube than at the connection with the tube, an outer part of said segments being divided by an inwardly tapering division so that, initially, the segment presents two separate cutting edges, but after wear to the level of the division the segment presents a single cutting edge whose length is substantially the same as the aggregate length of the two separate cutting edges.

Another aspect of the invention provides a diamond core drill comprising a support tube carrying a plurality of diamond-containing segments spaced around an end thereof, wherein at least some of the segments each have at least one aperture through from one side face to the opposite side face whereby, as the segments wear down to the level of the aperture, they become divided into at least two smaller segments.

The shape of the aperture may correspond to the initial external shape of segment, but other shapes are possible.

A further aspect of the invention provides a diamond core drill comprising a support tube carrying a plurality of diamond-containing segments spaced around an end thereof, wherein at least some of the segments are at least partially tapered so as to have a greater length remote from the tube than at the connection with the tube, an outer part of said segments being divided by an inwardly tapering division so that, initially, the segment presents two separate cutting edges, but after wear to the level of the division the segment presents a single cutting edge whose length is substantially the same as the aggregate length of the two separate cutting edges.

It is believed that a core drill in accordance with the invention will maintain a longer drilling life than conventional core drills, and will suffer a lower loss of cutting speed with prolonged use.

### Brief Description of the Drawings

In the drawings, which illustrate exemplary embodiments of the invention:

Figure 1 is a perspective view of a diamond core drill according to a first embodiment of the invention;

Figure 2 is a top plan view of the drill of Figure 1;

Figure 3 is an enlarged perspective view of a segment from the drill of Figures 1 and 2;

Figures 4 to 8 are perspective views of alternative segment shapes according to different embodiments of the invention;

Figures 9 and 10 are side elevations of further alternative segment shapes; and

Figure 11 is a perspective view of a segment according to yet another embodiment of the invention.

### Detailed Description of the Illustrated Embodiments

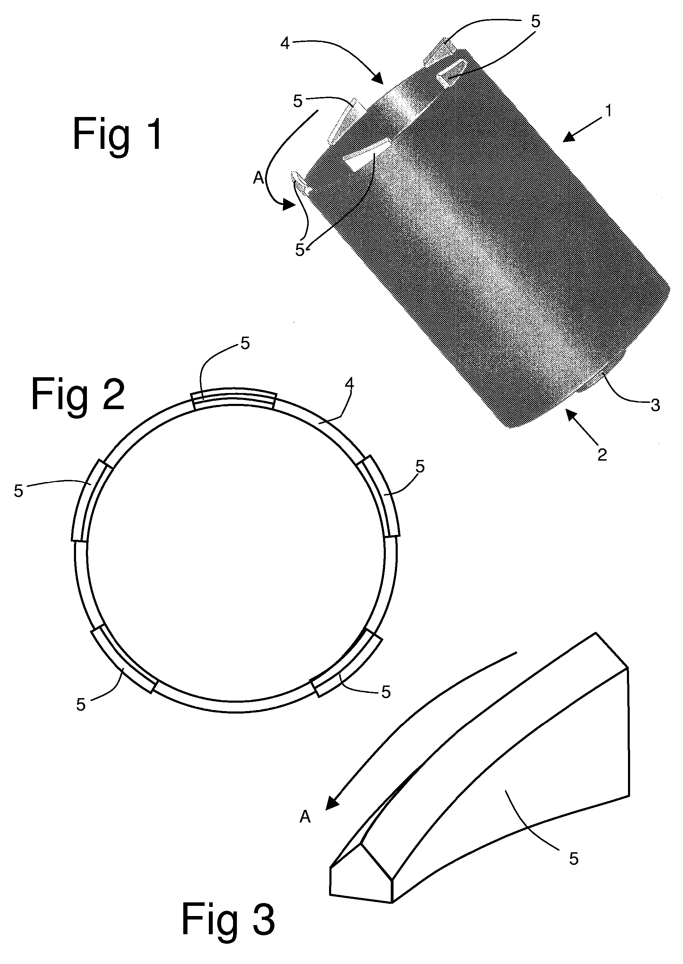

Referring first to Figures 1 to 3, a core drill comprises a steel tube 1 having one end 2 thereof closed by an end plate (not shown) which carries a threaded socket 3 by which the drill may be mounted on a spigot which is in turn carried by, for example, an electric hand-held drilling tool (also not shown). In these respects, the drill is of conventional design. At the open end 4 of the tube 1, five diamond cutting segments 5 are spaced apart evenly and welded on the rim of the tube, for example by means of laser welding or brazing. It will be understood that the number of segments and their size relative to the tube size may be varied according, for example, to the nature of the material to be drilled. Each segment 5 comprises a metal body in which is distributed diamond grit. The segments may be formed by compressing a mixture of powdered metal(s) and diamond grit in a mould and sintering the resulting compressed body. Conventionally, the segments are of a uniform height, considered lengthwise of the tube, and may be formed with a ridge or apex to provide a point for centring and to speed initial cutting. When, however, the point wears away in use, the segments continue with a grinding, rather than a cutting, action. The segments 5 according to this aspect of the invention have a height which decreases along the segment from one end to the other. In this way, as the segments are worn down, a sharp cutting point is maintained at the intersection between the worn part of the segment and the remaining part whose axial height above the end of the tube is less. It will be seen that it is necessary for the drill to rotate in the direction indicated in Figures 1 and 3 by arrow A for this action to occur satisfactorily. The segments 5 are curved so as to follow the circular end 4 of the tube 1. By maintaining a sharp cutting edge, the speed of cutting is higher than that of a conventional drill and this speed advantage is maintained as the segments wear.

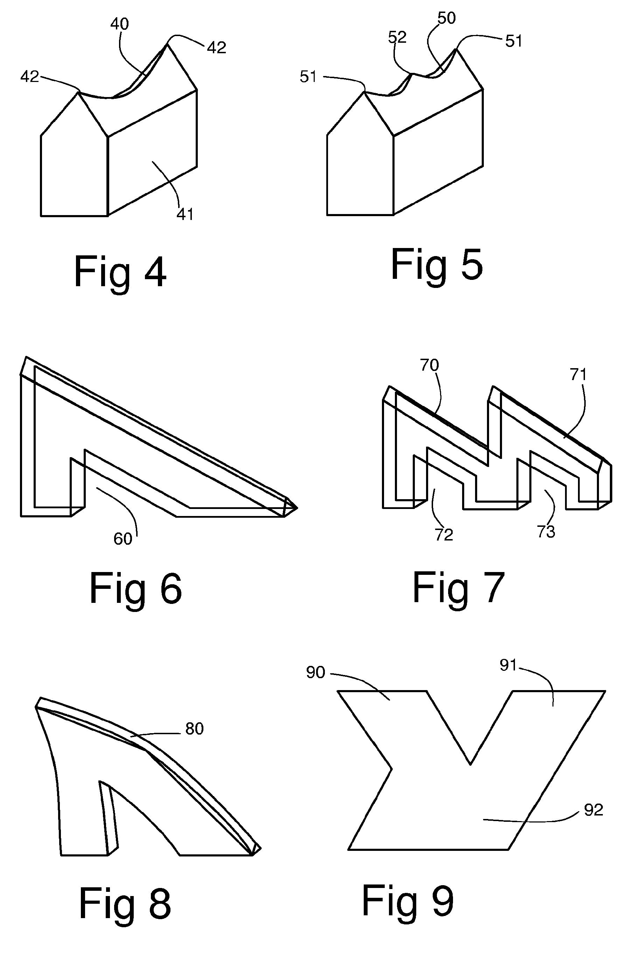

Figures 4 to 11 illustrate different segment configurations. In Figure 4, the sharper apex 40 of the segment 41 is curved in profile from a peak 42 at each end of the segment. This design of segment is not dependent on establishing a correct direction of rotation of the drill. The segment shown in Figure 5 again has a sharper apex 50 thereto, but has, in addition to a peak 51 at each end thereof a central peak 52, with concave curves between the peaks. Again, this design of segment is not dependent on a particular direction of rotation in use.

Figure 6 illustrates a segment incorporating two aspects of the invention. While being generally of the form shown in Figures 1 to 3, it also has an aperture 60 reflecting the general external shape of the segment and passing through from one side to the other. In addition to the advantages conferred by the shape illustrated in and described with reference to Figures 1 to 3, when the segment has worn down to the level of the aperture, it is divided by the aperture into two separate segments of shorter length relative to the circumference of the tube, reducing the residual grinding effect of flattened-off portion of the segment. Figure 7 illustrates a variant on this approach, having two sloping apex portions 70 and 71 externally and two apertures 72 and 73 internally, so that the longer-term effect of wear on the segment is to divide it into three separate short segments. Figure 8 shows another variant on the segment illustrated in Figure 6, in which the external apex portion 80 is convex in side elevation, so as to keep the length of the divided segments after wear to a minimum.

Figure 9 is a side elevation of a segment according to an alternative aspect of the invention, in which the Y-shape presents initially two shorter cutting surfaces 90 and 91 which wear down until they converge into a single segment 92 whose length is no more than, and preferably less than, the aggregate length of the two initial cutting surfaces.

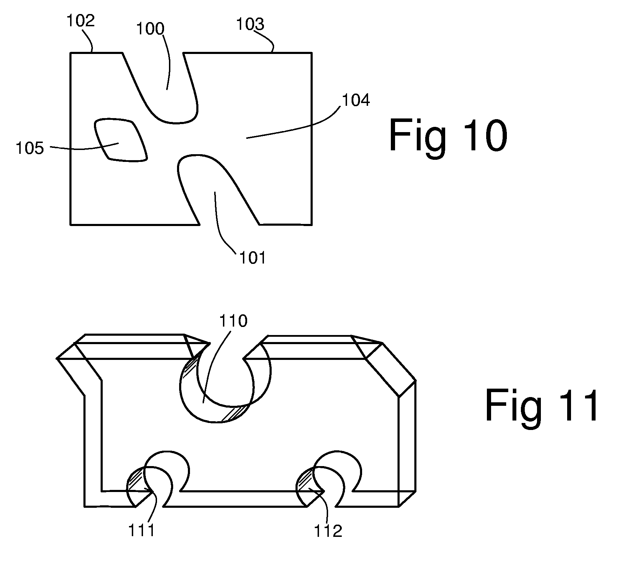

Figure 10 is an alternative to the configuration shown in Figure 9, presenting shaped slots 100 and 101 extending through the body of the segment so that the segment initially presents two cutting surfaces 102 and 103 whose combined length is less than the length of the segment. In the central region 104 of the segment between the slots 100 and 101, one or more holes 105 passing through the segment may be provided to avoid the full length of the segment being temporarily presented to the item being drilled, when the wear reaches that level.

Figure 11 shows another design having circular-section apertures 110, 111 and 112 through the segment from one side to the other, again with the object of subdividing the segment as it wears down.

It will be appreciated that, while the embodiments shown in Figures 4 to 11 are all illustrated as substantially straight, it may be desirable to curve them along their length to conform with the circular shape of the tube end.

## Claims

1. A diamond core drill, comprising a support tube carrying a plurality of diamond-containing segments spaced around an end thereof, at least some of the segments being shaped so as to present an apex on the face of the segment remote from the tube end, **characterised in that** the height of the apex along the longitudinal axis of the tube varies over the length of the segment.

2. A drill according to Claim 1, wherein the height of the apex varies linearly from a maximum at one end of the segment to a minimum at the opposite end thereof.

3. A drill according to Claim 1, wherein the height of the apex varies non-linearly along the length of the segment.

4. A drill according to Claim 3, wherein the height of the apex is at a maximum at each end of the segment.

5. A drill according to Claim 4, wherein the apex also forms a maximum or peak in between the ends of the segments, describing a convex curve in between adjacent maxima.

6. A drill according to any preceding claim, wherein at least some of the segments each have at least one aperture through from one side face to the opposite side face whereby, as the segments wear down to the level of the aperture, they become divided into at least two smaller segments.

7. A drill according to any of Claims 1 to 5, wherein at least some of the segments are at least partially tapered so as to have a greater length remote from the tube than at the connection with the tube, an outer part of said segments being divided by an inwardly tapering division so that, initially, the segment presents two separate cutting edges, but after wear to the level of the division the segment presents a single cutting edge whose length is substantially the same as the aggregate length of the two separate cutting edges.

8. A diamond core drill, comprising a support tube carrying a plurality of diamond-containing segments spaced around an end thereof, wherein at least some of the segments each have at least one aperture through from one side face to the opposite side face whereby, as the segments wear down to the level of the aperture, they become divided into at least two smaller segments.

9. A drill according to Claim 10, wherein the shape of the aperture corresponds to the initial external shape of the segment.

10. A diamond core drill, comprising a support tube carrying a plurality of diamond-containing segments spaced around an end thereof, wherein at least some of the segments are at least partially tapered so as to have a greater length remote from the tube than at the connection with the tube, an outer part of said segments being divided by an inwardly tapering division so that, initially, the segment presents two separate cutting edges, but after wear to the level of the division the segment presents a single cutting edge whose length is substantially the same as the aggregate length of the two separate cutting edges.
